# EUROPÄISCHE PATENTSCHRIFT

(11) **EP 2 069 609 B1**
(45) Veröffentlichungstag und Bekanntmachung des Hinweises auf die Patenterteilung: **23.03.2011**
(21) Anmeldenummer: 07820551.5
(22) Anmeldetag: 25.09.2007
(51) Int. Cl.: F01C 1/07, F01C 1/077, F01C 21/04, F01M 1/02

(54) **UMLAUFKOLBEN-BRENNKRAFTMASCHINE**
ROTARY PISTON INTERNAL COMBUSTION ENGINE
MOTEUR À COMBUSTION INTERNE À PISTONS ROTATIFS

(30) Priorität: 06.10.2006 DE 102006047249
(43) Veröffentlichungstag der Anmeldung: 17.06.2009
(73) Patentinhaber: Reyhani Design United Services GmbH, 37361 Hrdejovice (CZ)
(72) Erfinder: ECKHARDT, Dietrich, 73773 Aichwald (DE); SABET, Huschmand, 70469 Stuttgart (DE)
(74) Vertreter: Wolf, Eckhard
(86) Internationale Anmeldenummer: PCT/EP2007/060152
(87) Internationale Veröffentlichungsnummer: WO 2008/043664

(56) Entgegenhaltungen:
- EP-A- 0 711 379
- WO-A-01/81729
- WO-A-95/34750
- DE-A1- 4 218 885
- GB-A- 965 956
- GB-A- 2 262 965
- US-A- 3 736 080
- US-A- 4 370 109
- US-A- 5 501 182

## Beschreibung

Die Erfindung betrifft eine mittelachsige Umlaufkolben-Brennkraftmaschine, mit einem durch einen abtriebsseitigen und einen abtriebsgegenseitigen Gehäusedeckel verschlossenen kreiszylindrischen Rotorgehäuse, einem im Rotorgehäuse um dessen Mittelachse mit gleichförmiger Geschwindigkeit umlaufenden, einen abtriebsseitigen und einen abtriebsgegenseitigen Rotordeckel tragenden Außenrotor und einem im Inneren des Außenrotors um die Mittelachse mit ungleichförmiger Geschwindigkeit umlaufenden Innenrotor, wobei der Außenrotor mehrere radial nach innen weisende, starr miteinander verbundene Kolben und der Innenrotor eine entsprechende Anzahl radial nach außen weisende, zwischen je zwei Kolben des Außenrotors unter Begrenzung je zweier Arbeitskammern eingreifende, starr miteinander verbundene Gegenkolben aufweist und wobei jeder Arbeitskammer ein Brennraum zugeordnet ist und jeder Brennraum über ein Steuerfenster mit stationären Ein- und Auslassöffnungen kommuniziert.

Eine Brennkraftmaschine dieser Art ist beispielsweise aus der EP 07 11 379 B1 bekannt. Diese auch als Sabet-Motor bekannte Brennkraftmaschine weist einen zufriedenstellenden Hochdruckbetrieb mit geringeren Reib- und Ladungsverlusten und ein einfach gestaltetes Dichtsystem auf. Der Motor weist dort vier Kolben und vier Gegenkolben sowie vier Pleuelstangen auf, die Drehmoment vom Innenrotor auf den Außenrotor übertragen. Bei dieser Bauweise ist eine hohe Präzision bei der Herstellung und Montage erforderlich, da schon bei geringen Maßabweichungen im Bereich der Pleuelstangen ein freier Rundlauf nicht ohne weiteres gewährleistet ist und eine Selbsthemmung auftreten kann. Weiterhin weist dieser Motor eine insgesamt große Länge an Dichtungselementen auf, die zu Reibungsverlusten und Gasleckagen beitragen.

Ausgehend hiervon liegt der Erfindung vorrangig die Aufgabe zugrunde, eine Brennkraftmaschine der eingangs genannten Art derart weiterzuentwickeln, dass ein höherer Wirkungsgrad erreicht wird und die Produktionskosten gesenkt werden.

Zur Lösung dieser Aufgabe werden die in den Patentansprüchen 1 und 17 angegebenen Merkmalskombinationen vorgeschlagen. Vorteilhafte Ausgestaltungen und Weiterbildungen der Erfindung ergeben sich aus den abhängigen Ansprüchen. Ein Arbeitsverfahren zum Betrieb der Maschine ist in Anspruch 21 angegeben.

Die Erfindung geht vor allem von dem Gedanken aus, dass eine optimierte Brennraumgestaltung und eine möglichst geringe Länge der Dichtungselemente zu einer Verbesserung des Wirkungsgrades beitragen. Gemäß der Erfindung wird dies vor allem dadurch erreicht, dass der Außenrotor drei in gleichen Winkelabständen zueinander angeordnete Kolben aufweist. Entsprechend weist der Innenrotor drei Gegenkolben auf. Gegenüber einer Brennkraftmaschine mit jeweils vier Kolben und Gegenkolben weisen die Brennräume der erfindungsgemäßen Maschine ein thermodynamisch günstigeres Verhältnis der Oberfläche zum Volumen auf und die Gesamtlänge der die Brennräume abdichtenden Elemente ist geringer, so dass Gasleckagen und Reibungsverluste reduziert werden. In bevorzugter Ausgestaltung werden gute Laufeigenschaften der Brennkraftmaschine vor allem dann erreicht, wenn hinsichtlich der Drehmomentübertragung von dem Innenrotor auf den Außenrotor eine geometrische Überbestimmung vermieden wird. Daher sind an dem Innenrotor vorteilhaft drei Pleuelzapfen vorgesehen, an denen drei mit ihren anderen Enden über Exzenterwellen mit dem Außenrotor verbundene Pleuelstangen gelagert sind. Hierdurch wird eine vollständige Abstützung des Innenrotors geschaffen, ohne dabei eine Überbestimmung zu verursachen. Kinematisch günstig ist es wenn die Zentren der Pleuelzapfen im Abstand von der Mittelebene der Gegenkolben angeordnet sind.

In bevorzugter Ausgestaltung der Erfindung sind die Pleuelzapfen einstückig mit dem Innenrotor ausgebildet, der vorteilhaft aus Leichtmetall, insbesondere aus einer Aluminiumlegierung besteht. Üblicherweise werden Pleuelstangen auf Stahlzapfen oder -bolzen gelagert. Solche müssten jedoch in das Leichtmetallmaterial des Innenrotors eingepasst werden, was auf Grund unterschiedlicher thermischer Ausdehnungskoeffizienten der Werkstoffe zu Beschädigungen des weniger widerstandsfähigen Leichtmetallrotors führen könnte.

Zur Übertragung der Drehbewegung des Innenrotors auf den Außenrotor ist an dem Rotorgehäuse ein Hohlrad angeordnet, mit dem auf den Exzenterwellen angeordnete Planetenräder in kämmendem Eingriff stehen. Die Exzenterwellen werden beim Umlauf des Innenrotors durch die Pleuelstangen in eine Drehbewegung versetzt und diese im Übersetzungsverhältnis von den Planetenrädern zum Hohlrad auf den Außenrotor übertragen. In bevorzugter Ausgestaltung der Erfindung beträgt das Zähnezahlverhältnis 1:3. Grundsätzlich ist es möglich, anstatt der Kombination Planetenräder und Hohlrad eine Kombination Planetenräder und Sonnenrad zu verwenden, wobei das Sonnenrad dann beispielsweise am abtriebsseitigen Gehäusedeckel angeordnet wird. Weiterhin ist es von Vorteil wenn die Planetenräder einstückig mit den Exzenterwellen ausgebildet sind.

In vorteilhafter Ausgestaltung der Erfindung ist jedem Brennraum eine Zündkerze zugeordnet, die vorzugsweise zentral in ihrem zugehörigen Brennraum angeordnet ist. Der besondere Vorteil dieser Anordnung besteht darin, dass die Zündkerze zentral in ihrem Brennraum angeordnet werden kann, wodurch sich eine bessere Verbrennung des Gemisches und somit eine Steigerung des Wirkungsgrades ergibt. Ein weiterer Vorteil dieser Ausführungsart besteht darin, dass eine parameterabhängige Zündkurve vorgesehen werden kann, d.h. der Zündzeitpunkt kann in Abhängigkeit beispielsweise der Drehzahl, der Last, der Temperatur und/oder der Brennstoffart und - qualität variiert werden. Die Zündkerzen können dabei mittels einer vom Rotorgehäuse zum Außenrotor führenden Funkenstrecke mit elektrischer Energie versorgt werden. Dazu ist im Rotorgehäuse eine elektrisch isolierte Elektrode angeordnet, die mit dem Zündkabel verbunden ist. Zweckmäßig ist der Außenrotor mit einer Isolierbeschichtung versehen, die Überschläge der im Bereich von 25 kV liegenden Zündspannung auf den Außenrotor verhindert. Nur die Hochspannungsanschlüsse der Zündkerzen durchdringen mittig diese Isolierschicht.

Alternativ ist es auch möglich, eine Zündkerze im Gehäusedeckel anzuordnen, die für die Zündung des Gemisches in sämtlichen Brennräumen zuständig ist. Durch die Anordnung der Zündkerze im Randbereich des Brennraums ergibt sich ein vergleichsweise weiter Weg für die Flammfront, so dass die Verbrennung in diesem Fall nicht so optimal ist wie bei einer zentralen Anordnung. Weiterhin ist man an einen geometrisch vorgegebenen Zündbereich gebunden. Allerdings entsteht durch diese Ausführungsform weniger konstruktiver Aufwand, was bei bestimmten Anwendungen vorzuziehen sein kann.

Falls eine Benzin-Direkteinspritzung gewählt wird, dann kann eine einzige Einspritzdüse im Gehäusedeckel sämtliche Brennräume mit Kraftstoff versorgen.

Um eine hinreichende Belastbarkeit bei der über die Pleuelstangen erfolgende Kraftübertragung zwischen dem Innenrotor und dem Außenrotor zu gewährleisten, insbesondere wenn die Pleuelzapfen am Innenrotor einstückig mit diesem aus einer Leichtmetalllegierung bestehen, die einen mit diesem aus einer Leichtmetalllegierung bestehen, die einen geringeren Festigkeitswert als beispielsweise Stahl aufweist, sollten die Pleuelzapfen und die kleinen Pleuelaugen der Pleuelstangen einen möglichst großen Durchmesser aufweisen, um so eine große effektive Lagerfläche zu schaffen. Dabei ist der Durchmesser durch den notwenigen Freigang zwischen benachbarten Pleuelstangen bzw. Lageraugen beim Umlauf der Rotoren begrenzt. Weiterhin hat sich ergeben, dass es von Vorteil ist, wenn das Verhältnis der Radien der geometrischen Orte der Zentren der Planetenräder und der kleinen Pleuelaugen der Pleuelstangen beim Umlauf der Rotoren im Bereich von 2,5:1 bis 3,5:1 liegt und vorzugsweise etwa 3,0:1 beträgt.

In weiter bevorzugter oder alternativer Ausgestaltung der Erfindung ist in dem Außenrotor mindestens eine als Zahnradpumpe ausgebildete Ölpumpe vorgesehen, deren Antriebszahnrad mit der Exzenterwelle verbunden ist. Ein separates Ölpumpengehäuse ist somit entbehrlich. Bevorzugt ist in jedem der drei Kolben eine derartige Ölpumpe vorgesehen, wodurch das Fördervolumen für Schmier- und Kühlzwecke erhöht wird und alle drei Kolben gleichermaßen durch das in den Ölpumpen zwangsweise umlaufende Öl intensiv gekühlt werden. Die vorteilhafte Anordnung der Ölpumpen im Bereich der Exzenterwellen ist bei diesem Sabet-Motor mit drei Kolben aufgrund des vorhandenen Bauraumes möglich. Bei einem Motor mit vier Kolben ist im Bereich der Exzenterwellen kein ausreichender Raum für eine derartige Lösung vorhanden.

Eine weitere bevorzugte oder alternative Ausgestaltung der Erfindung sieht eine im Wesentlichen ringförmig ausgebildete Ölsammelwanne für Schmier- und/oder Kühlöl vor, die koaxial zur Mittelachse der Rotoren angeordnet ist. Die Brennkraftmaschine ist damit für einen Betrieb ausgelegt, bei dem die Mittelachse der Rotoren im Wesentlichen vertikal ausgerichtet ist und die Rotoren in einer horizontalen Ebene umlaufen.

Als Betriebsstoffe kommen Otto- oder Dieselkraftstoff, Ethanol und Gase wie Wasserstoff, Erdgas, LPG und dergleichen in Betracht. Besonders Interessant ist die Verwendung von Wasserstoff als Brennstoff. Ein Wasserstoff/Luft-Gemisch ist theoretisch bis zu einem Luftverhältnis von etwa 10:1 zündfähig. Dies ermöglicht auch beim Wasserstoffmotor eine Laständerung durch Qualitätsregelung mit ähnlich hohen inneren Wirkungsgraden wie sie Dieselmotoren aufweisen. Dieser Vorteil gilt für Hubkolben- und Kreiskolbenmotoren gleichermaßen. Signifikante Unterschiede bestehen jedoch bei der Zündung und Verbrennung von Wasserstoff/Luft-Gemischen. Vorteilhaft hinsichtlich der unerwünschten Selbstzündung des Gemisches im Verbrennungsraum wirkt sich aus, dass der Ladungswechsel bei dem erfindungsgemäßen Sabet-Motor schlitzgesteuert, beim Viertakt-Hubkolbenmotor hingegen ventilgesteuert erfolgt. Dadurch kann die Entstehung von übermäßig heißen Bereichen, so genannten "hot spots", im Verbrennungsraum des Sabet-Motors weitgehend vermieden und dieser bei Volllast mit geringerem Luftverhältnis, also höherer spezifischer Leistung, betrieben werden als ein entsprechender Hubkolbenmotor. Die Brenngeschwindigkeit ist in Wasserstoff/Luft-Gemischen unter sonst gleichen Randbedingungen höher als in Benzin/Luft-Gemischen, wodurch Wasserstoffmotoren ein höheres Verbrennungsgeräusch aufweisen als Benzinmotoren. Allerdings nimmt das ohnehin geringere Motorgeräusch des Sabet-Motors bei Wasserstoffbetrieb auf Grund der dort geringeren Temperatur der Verbrennungsgase nicht so stark zu wie das eines entsprechenden Hubkolbenmotors.

Eine bevorzugte Verwendung der Brennkraftmaschine ist der Einsatz als Generatorantrieb in einem Hybridmotor für Kraftfahrzeuge. Die Brennkraftmaschine kann dabei in vorteilhafter Weise mit annähernd konstanter Drehzahl betrieben werden um Akkumulatoren zu laden, während der Fahrzeugantrieb ausschließlich über einen oder mehrere von diesen gespeiste Elektromotoren erfolgt.

Eine weitere bevorzugte Verwendung des Sabet-Motors ist der Einsatz als Antrieb für mobile oder dezentrale stationäre Anlagen zur Erzeugung von Strom, Wärme/Kälte und mechanischer oder hydraulischer Energie zum Betrieb von Arbeitsmaschinen wie beispielsweise Pumpen, Förder- und Hebezeuge sowie Werkzeugmaschinen. Die Mehrstofffähigkeit des Sabet-Motors, also der Betrieb mit flüssigen oder gasförmigen Erdöl-Derivaten, mit aus nachwachsender Biomasse erzeugten Kraftstoffen oder Wasserstoff, ist dabei ein besonderer Vorteil.

Im Folgenden wird die Erfindung anhand der in der Zeichnung in schematischer Weise dargestellten Ausführungsbeispiele näher erläutert. Es zeigen
- Fig. 1: einen Längsschnitt durch ein Ausführungsbeispiel der erfindungs- gemäßen Brennkraftmaschine,
- Fig. 2: eine schematische Ansicht der Außen- und Innenrotoren der Brennkraftmaschine gemäß Fig. 1,
- Fig. 3a: bis c Vorder- und Rückansichten sowie eine Querschnittsansicht des Innenrotors gemäß Fig. 2,
- Fig. 4: eine Vorderansicht des Außenrotors gemäß Fig. 2 mit in den Kol- ben vorgesehenen Ölpumpenausnehmungen,
- Fig. 5a: bis h eine schematische Darstellung des bei der Maschine gemäß Fig. 1 bis 4 zur Anwendung kommenden 6-Taktverfahrens,
- Fig. 6: eine schematische Ansicht der Größenverhältnisse der kleinen und großen Pleuelaugen sowie des geometrischen Orts ihrer Mit- telpunkte beim Umlauf, und
- Fig. 7: ein vereinfachter Längsschnitt gemäß Fig. 1 mit einer in einem Kolben angeordneten Ölpumpe und einer teilweisen Darstellung des Kühlölkreislaufes.

Bei der in der Zeichnung dargestellten Umlaufkolben-Brennkraftmaschine handelt es sich um einen Sabet-Motor mit axialem Ladungsaustausch und jeweils drei Kolben und Gegenkolben. Der Motor ist für einen Betrieb mit stehender Welle ausgelegt, bei dem die Welle vertikal ausgerichtet ist und die Kolben und Gegenkolben in einer horizontalen Ebene umlaufen. Eine derartige Anordnung findet beispielsweise bei Bootsmotoren oder Hilfsmotoren für die Stromerzeugung Anwendung, die eine Leistung von etwa 20 - 30 kW aufweisen können.

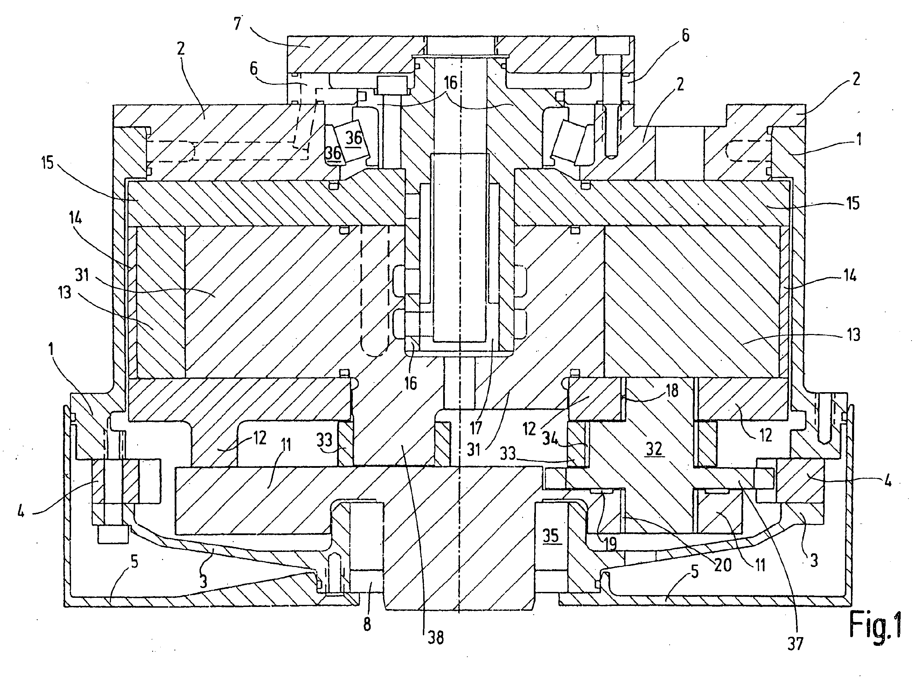

Die in Fig. 1 im Längsschnitt dargestellte Brennkraftmaschine besteht aus feststehenden und umlaufenden Baugruppen, wobei die feststehende Baugruppe im Wesentlichen ein Gehäuse 1 mit einem abtriebsgegenseitigen oberen Gehäusedeckel 2 und einem unteren Gehäusedeckel 3, ein mit dem Gehäuse verbundenes Hohlrad 4 und eine an dem unteren Gehäusedeckel 3 befestigte Ölwanne 5 umfasst. Weiterhin gehören zu der feststehenden Baugruppe eine Ölverteilerscheibe 6, ein zugeordneter Deckel 7 mit einer Ölzuführung sowie ein Wellendichtring 8.

Die zusammen mit einem Abtrieb 11 umlaufende Baugruppe besteht im Wesentlichen aus einem unteren Rotordeckel 12, einem Außenrotor 13, einer Isolierschicht 14, einem oberen Rotordeckel 15, einem Lagerflansch 16, einem eingepressten Einsatz 17 zur Ölverteilung, einer inneren Lagerbuchse 18, einer Anlaufscheibe 19 und einer äußeren Lagerbuchse 20.

Weiter weist die Brennkraftmaschine einen Innenrotor 31, drei in den inneren und äußeren Lagerbuchsen 18, 20 gelagerte Exzenterwellen 32, zugehörige Pleuelstangen 33, die mittels Lagerbuchsen 34 auf den Exzenterwellen 32 gelagert sind, sowie Zylinderrollenlager 35 und Kegelrollenlager 36 für die Lagerung der mit dem Abtrieb 11 umlaufenden Baugruppe in dem unteren Gehäusedeckel 3 und oberen Gehäusedeckel 2 auf. Planetenräder 37 sind einstückig mit den Exzenterwellen 32 ausgebildet und stehen in kämmendem Eingriff mit der Innenverzahnung des Hohlrads 4.

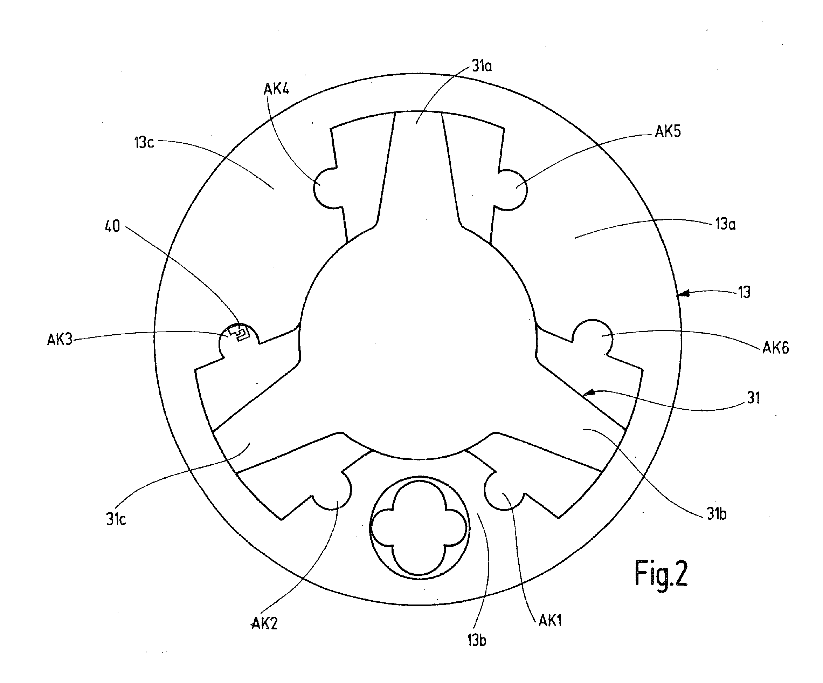

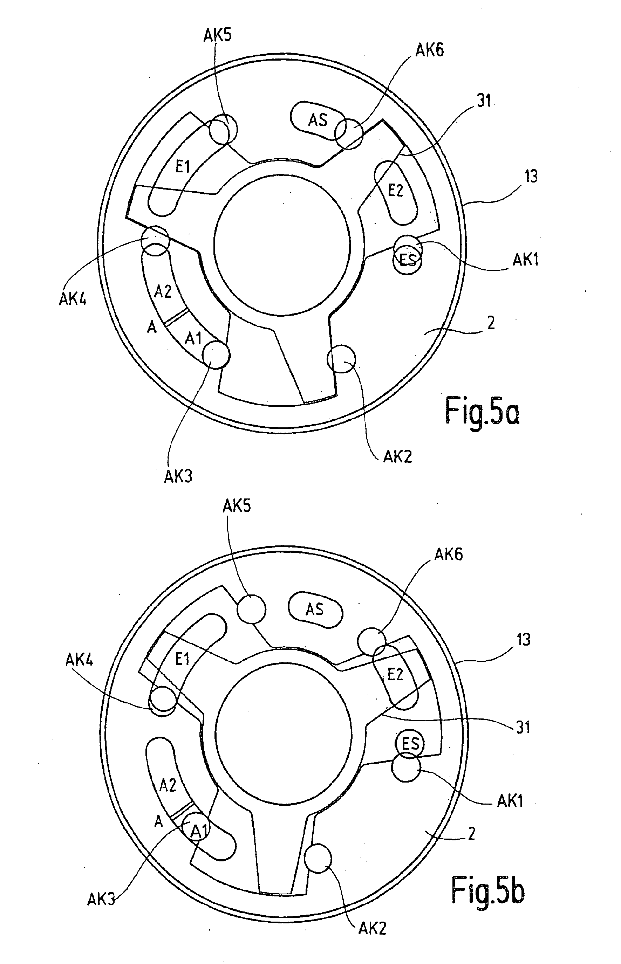

Fig. 2 zeigt eine schematische Ansicht der Außen- und Innenrotoren 13, 31. Zwischen den Kolben 13a - c des Außenrotors 13 befinden sich die Arbeitsräume, in die die am Innenrotor 31 nach außen flügelartig abstehenden Gegenkolben 31a-c eingreifen. Im gegenseitigen Eingriffsbereich der Kolben und Gegenkolben werden insgesamt sechs Arbeitsräume AK1 bis AK6 gebildet, deren Volumen durch das Hin- und Herschwingen der Gegenkolben periodisch verkleinert und vergrößert wird. Stirnseitig sind die Arbeitsräume durch die in Fig. 1 dargestellten, mit dem Außenrotor 13 fest verbundenen Rotordeckel 12, 15 begrenzt. Der obere Rotordeckel 15 enthält Steueröffnungen für den Gaswechsel, deren Lage und Funktion anhand von Fig. 5a bis 5h näher erläutert ist. Jedem Arbeitsraum ist eine seitlich an diesen anschließende, teilzylinderförmige Brennkammer zugeordnet, in denen jeweils eine (hier nur für AK3 dargestellte) Zündkerze 40 mittig angeordnet ist. Da eine Spannungsversorgung der mit dem Außenrotor 31 umlaufenden Zündkerzen über herkömmliche Zündkabel nicht möglich ist, erfolgt die Versorgung über eine Funkenstrecke. Im Rotorgehäuse ist dazu eine nicht näher dargestellte, mit einem Zündkabel verbundene Elektrode angeordnet. Die Isolierschicht 14 am Außenrotor 13 verhindert ein Überschlagen der Zündspannung auf den Außenrotor. Als Betriebsstoffe kommen Otto- oder Dieselkraftstoff, Ethanol und Gase wie Wasserstoff, Erdgas, LPG und dergleichen in Betracht.

Die Relativbewegung zwischen dem Innenrotor 31 und dem Außenrotor 13 erfolgt über die auf den Exzenterwellen 32 angeordneten oder einstückig mit diesen ausgebildeten Planetenräder 37, die mit dem Hohlrad 4 kämmen. Beim Umlauf des Innenrotors 31 versetzen die Pleuelstangen 33 auf Grund ihrer exzentrischen Lagerung auf den Exzenterwellen 32 diese in eine Drehbewegung, und über die Planetenräder 37 und das Hohlrad 4 wird der Außenrotor 13 mit dem Abtrieb 11 angetrieben.

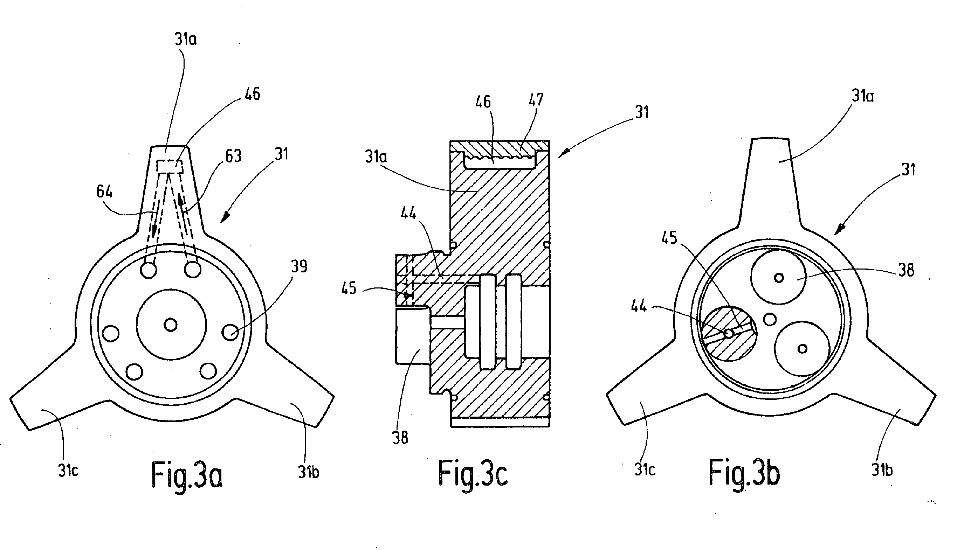

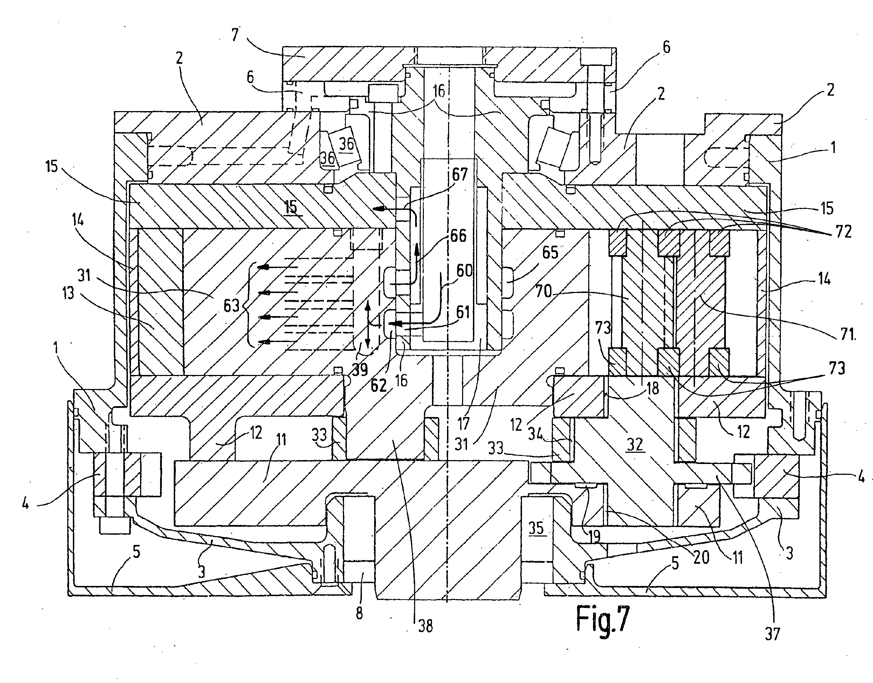

In Fig. 3 ist der Innenrotor 31 mit den flügelartig nach außen ragenden Gegenkolben 31 a-c in einer Vorder- und Rückansicht sowie im Querschnitt dargestellt. Der Innenrotor weist sechs Bohrungen 39 auf, die vom Ölkreislauf mit Kühlöl versorgt werden. Längs- und Querbohrungen 44, 45 führen Schmieröl zu den Lagerstellen an den Pleuelzapfen 38 für die Pleuelstangen 33. Aus Fig. 3c ist ersichtlich, dass im Bereich der thermisch hoch belasteten Außenpartien der Gegenkolben 31 a-c eine ebenfalls in den Ölkreislauf eingebundene Kühltasche 46 gebildet ist. Der Gegenkolben weist daher aus fertigungstechnischen Gründen eine die Kühltasche 46 bildende Ausfräsung und einen diese abdeckenden Kolbendeckel 47 auf. Fig. 3a zeigt weiterhin Kanäle 63 und 64, die zu der Kühltasche 46 hin und von dieser weg führen. Es sind jeweils vier dieser Kanäle parallel zueinander angeordnet. Der Kühlölstrom in diesem Bereich wird anhand von Fig. 7 näher erläutert.

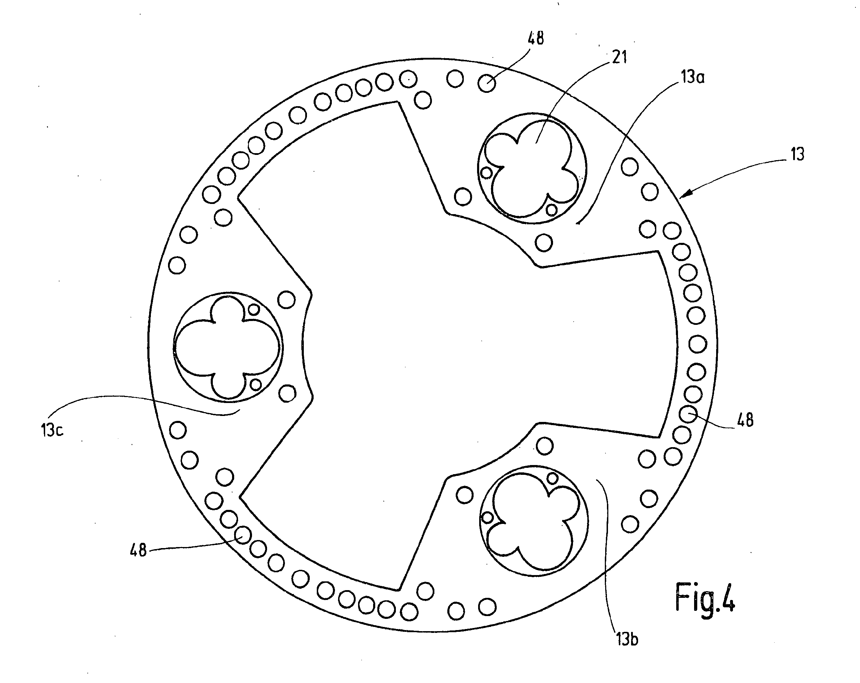

Fig. 4 zeigt eine Vorderansicht des Außenrotors 13 mit Ausnehmungen 21 in den Kolben13a - c, die für Zahnradölpumpen bestimmt sind. Die Ausnehmungen 21 haben die Form von vier einander überlappenden Kreisen, wobei die radial aneinandergereihten, größeren Kreise den Platz für die Zahnräder der Pumpe bilden, während die in Umfangsrichtung aufgereihten, kleineren Kreise die Räume für Zu- und Abfluss des Öls bilden. Die radial innen angeordneten Antriebszahnräder der Ölpumpen sind direkt auf den Exzenterwellen 32 angeordnet, und zwar auf deren im unteren Rotordeckel 3 gelagerten, nicht-exzentrischen Partie, so dass ein separates Ölpumpengehäuse und ein separater Ölpumpenantrieb nicht erforderlich sind. Zum Aufbau eines hinreichenden Öldrucks bei der Inbetriebnahme der Brennkraftmaschine ist zusätzlich eine externe, elektrische Ölpumpe (nicht dargestellt) vorgesehen.

Bei laufendem Motor fördert die elektrische Ölpumpe das zur Schmierung und Kühlung der Gleitlager abgezweigte Öl aus der Ölwanne 5 in den ansonsten geschlossenen Ölkreislauf zurück. Der zur Schmierung notwendige Öldruck wird von der elektrischen Ölpumpe aufgebaut. Die Zahnradölpumpen in den Kolben 13a-c sind für einen wesentlich größeren Öldurchsatz ausgelegt und gleichen den Druckverlust bei der Umwälzung des Kühlöls aus. Ebenfalls nicht näher dargestellt sind übliche weitere Ölkreislaufkomponenten wie ein Ölkühler und ein Ölfilter. Fig. 4 zeigt weiterhin eine Vielzahl von hauptsächlich über den Umfang des Außenrotors 13 verteilte Bohrungen 48 für Kühlöl.

Das Funktionsprinzip der nach einem 6-Taktverfahren arbeitenden Brennkraftmaschine wird anhand der Figurenfolge 5a bis 5h und der nachstehenden Tabelle näher erläutert. Neben den vom 4-Taktprinzip her bekannten Takten, also Ansaugen, Verdichten, Arbeiten und Ausstoßen, findet hier zusätzlich ein Aufladen eines Speichers mit Luft oder Gemisch (in der Tabelle unten: f, Speicher aufladen), ein zweiter Ansaugtakt und eine Zugabe der komprimierten Luft oder des komprimierten Gemisches aus dem Speicher in eine Arbeitskammer am Beginn des Verdichtungstaktes (in der Tabelle unten: a, Nachladung und/oder Aufladung der AK vom Speicher) statt. Die Brennkraftmaschine verfügt somit gleichsam über einen integrierten Kompressor. Eine zusätzlich Aufladung durch einen externen Kompressor oder Turbolader ist jedoch ebenfalls möglich. In Unterscheidung zu einer Aufladung durch externe Aggregate wird die interne Aufladung auch als Nachladung bezeichnet.

Es sind acht Stellungen im Abstand von jeweils 15° Drehwinkel am Abtrieb 11 dargestellt, entsprechend jeweils 45° Drehwinkel der drei Exzenterwellen 32 relativ zum Außenrotor. Die Steueröffnungen auf der Unterseite des oberen Gehäusedeckels 2 sind wie folgt benannt: A ist der Auslass, der durch einen Steg im Flansch (Oberseite des Deckels) in die zwei Kanäle A1 und A2 aufgespaltet ist, die stromabwärts wieder zusammengeführt sein können. Wenn A1 öffnet soll wegen der Überschneidung mit der vorauslaufenden Arbeitskammer kein Druckstoß direkt nach A2 gelangen. E1 ist ein erster Einlass für Luft oder Gemisch, AS ist ein Auslass zu einem Speicher, E2 ist ein zweiter Einlass für Luft oder Gemisch und ES ist ein Einlass vom Speicher. Der Speicher ist ein Verbindungskanal zwischen den Steueröffnungen AS und ES. Sein Volumen beträgt ein Mehrfaches, beispielsweise das 5- bis 20-fache, des Hubvolumens einer einzelnen Arbeitskammer. AK1 bis AK6 sind die sechs Arbeitskammern im Außenrotor 13, die in den oberen Rotordeckel 15 hineinragen und auf dessen Oberseite die gezeigte kreisrunde Kontur im Winkelabstand von jeweils 60° aufweisen. Dieser Winkelabstand basiert auf den hier gewählten Totpunktabständen von je 60°. Im allgemeinen Fall sind die beiden Totpunktabstände verschieden, ihre Summe beträgt 120°. Der Winkelabstand der Steueröffnungen auf der Oberseite des oberen Rotordeckels beträgt dann alternierend 60°-x und 60°-x. Die Ausnehmungen im oberen Rotordeckel bilden zu einem erheblichen Anteil den Brennraum.

Die zugehörigen Vorgänge in den Arbeitskammern ergeben sich aus folgender Tabelle:

| Fig. | Winkel | Arbeitskammer | | | | | |
|---|---|---|---|---|---|---|---|
| | | AK1 | AK2 | AK3 | AK4 | AK5 | AK6 |
| 5a | 0° | a | b | c | d | e | f |
| 5b | 15° | a | g | h | i | j | i |
| 5c | 30° | j | k | h | l | f | l |
| 5d | 45° | m | k | h | l | f | e |
| 5e | 60° | b | c | d | e | f | a |
| 5f | 75° | g | h | i | j | i | a |
| 5g | 90° | k | h | l | f | l | j |
| 5h | 105° | k | h | l | f | e | m |

Hierbei bedeutet:

| | |
|---|---|
| a | Aufladung der AK vom Speicher |
| b | Verbrennung |
| c | Auslass öffnet |
| d | Auslass schließt |
| e | Einlass schließt |
| f | Speicher aufladen |
| g | Verbrennung, Expansion |
| h | Ausschieben |
| i | Einlass öffnet |
| j | Verdichtung |
| k | Expansion |
| l | Ansaugen |
| m | Zündung |

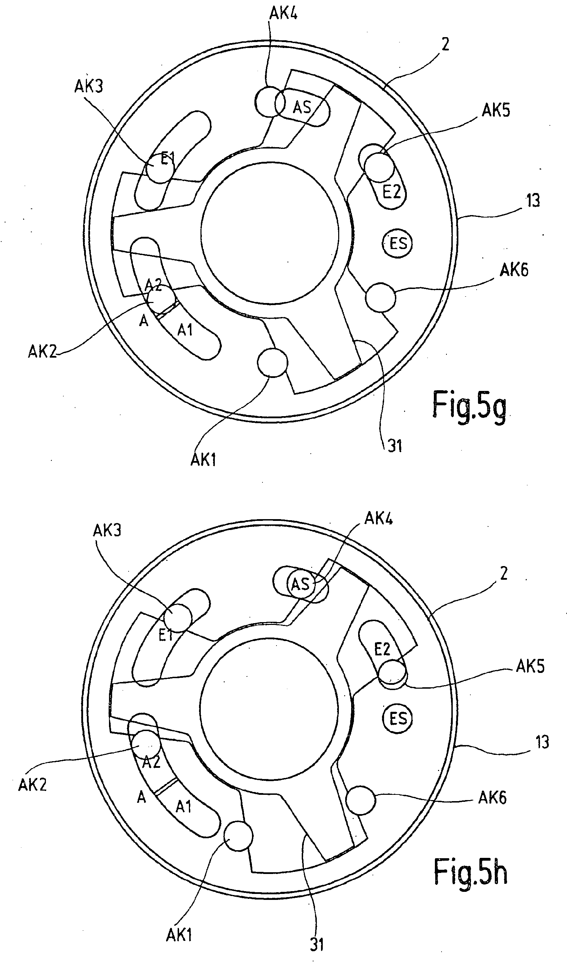

Dieses Schema kann unter Berücksichtigung der Symmetrie im Dreiflügelmotor beliebig fortgesetzt werden. Hierzu kehrt man nach Fig. 5h zurück zu Fig. 5a und erhöht die Nummer der Arbeitskammer AK um 2. Folglich gelten die Fig. 5a bis 5h und die Tabelle für den Drehwinkelbereich am Abtrieb von 120° bis 225° wenn AK1 durch AK3, AK2 durch AK4, AK3 durch AK5, AK4 durch AK6, AK5 durch AK1 und AK6 durch AK2 ersetzt wird.

Die Taktfolge beispielsweise für die Arbeitskammer AK1 für eine volle Umdrehung des Außenrotors 13 und Abtriebs 11 von 360° kann aus der Tabelle abgelesen werden, indem zunächst die zur AK1 gehörige Spalte von oben nach unten verfolgt wird, dann die zur AK3 gehörige Spalte und schließlich die zur AK5 gehörige Spalte.

Im Einzelnen findet demnach folgendes statt (alle Gradangaben in der Tabelle beziehen sich auf den Außenrotordrehwinkel): Sowohl der Innenrotor 31 als auch der Außenrotor 13 bewegen sich im Uhrzeigersinn. Während der Außenrotor 13 gleichförmig umläuft, "pendeln" die Gegenkolben 31a - c des Innenrotors 31 bei einer vollen Umdrehung dreimal zwischen den benachbarten Kolben 13a - c des Außenrotors 13 hin und her, führen also sechs Takte aus.

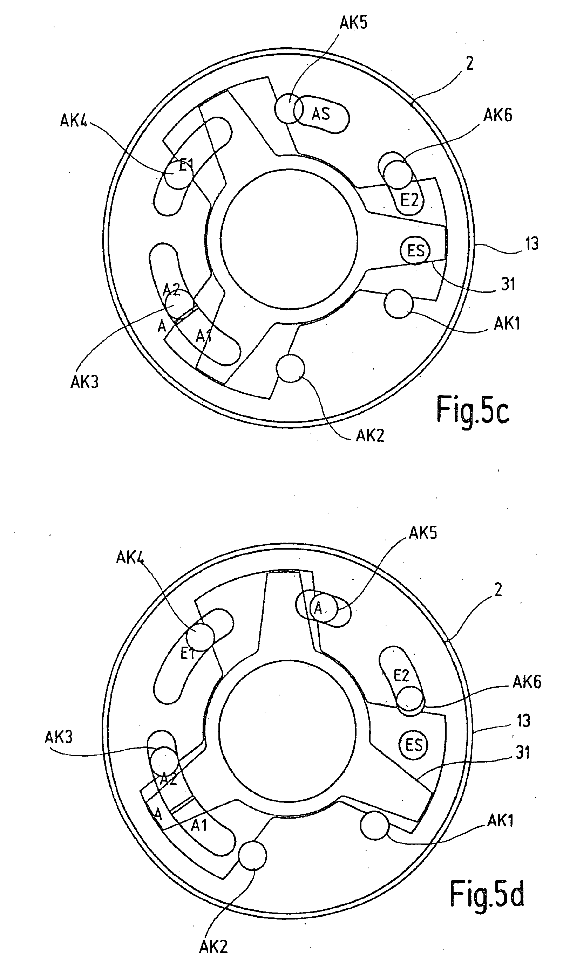

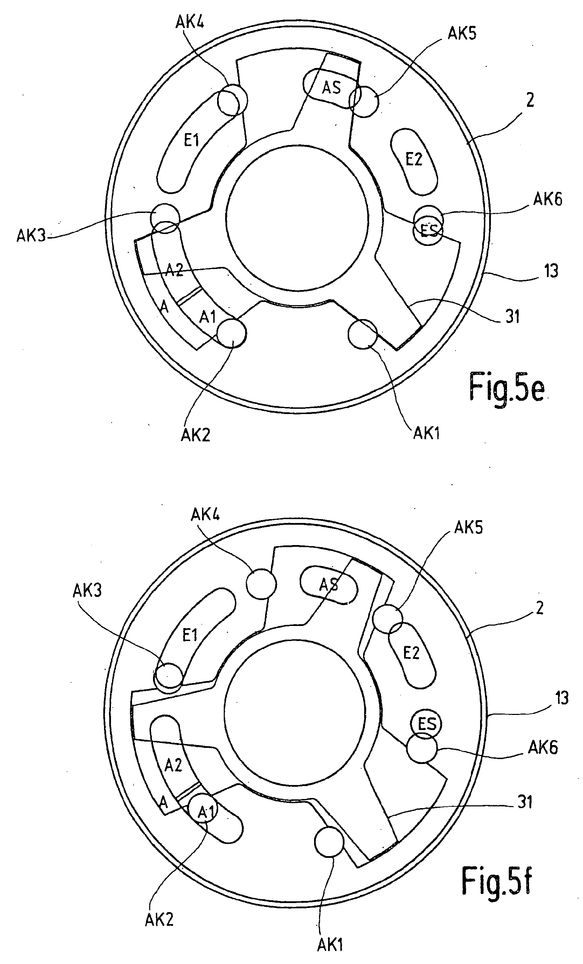

Die in Fig. 5a gezeigte Stellung wird als 0°-Stellung definiert. AK1 überlappt hier mit dem Steuerfenster ES. Dieses kommuniziert mit einem zuvor mit Luft oder Gemisch aufgeladenen Speicher (das Aufladen des Speichers wird unten näher erläutert). Die Ladeluft kann so lange in den zuvor mit einem Luft/Brennstoffgemisch befüllten Raum AK1 strömen, bis die Überlappung von AK1 und ES endet und somit die Verbindung zum Speicher unterbricht. Dieser Zustand ist in Fig. 5b fast erreicht. Gleichzeitig mit dem Ladevorgang bewegt sich der zu AK1 gehörige Gegenkolben von seiner Lage nahe AK6 in Richtung AK1. Es findet hierdurch eine Verdichtung des zu AK1 gehörenden Volumens statt. In der in Fig. 5d gezeigten Stellung findet bei noch restlicher Verdichtung die Zündung des in AK1 komprimierten Gemisches statt, entsprechend der Zündung vor dem oberen Totpunkt in herkömmlichen Ottomotoren. Es folgt die Verbrennung und Expansion der Verbrennungsgase, Fig. 5e und 5f, wodurch der Gegenkolben von AK1 weg gedrängt wird (Arbeitstakt). Die weitere Expansion der Verbrennungsgase ist in Fig. 5g und 5h dargestellt. Hiermit ist das Ende der zu AK1 gehörigen Spalte in der Tabelle erreicht.

Wie oben erläutert wurde, ist für die folgenden Takte der AK1 zunächst die in der Tabelle zu AK3 gehörige Spalte heranzuziehen, später die zu AK5 gehörige Spalte. Folglich ist nun zu Fig. 5a zurückzukehren und dort AK3 als stellvertretend für AK1 zu betrachten. Wenn also nachfolgend aus Gründen der besseren Orientierung in der Zeichnung auf AK3 Bezug genommen wird, handelt es sich doch um die für AK1 maßgeblichen Vorgänge im weiteren Verlauf einer vollen Umdrehung des Außenrotors 13.

Die Expansion der Verbrennungsgase hat stattgefunden und AK3 überlappt nun mit dem Auslassbereich A1 des Auslasses A, durch den die nun als Abgase zu bezeichnenden Verbrennungsgase ausgeschoben werden. Der Auslass A ist durch einen Steg in die Bereiche A1 und A2 unterteilt, damit, wie aus Fig. 5a ersichtlich, die anfangs über AK3 ausgestoßenen Abgase nicht zu AK4 gelangen können, die zu diesem Zeitpunkt gerade noch mit dem Bereich A2 überlappt. AK3 bewegt sich nun weiter entlang A1 und A2 und gleichzeitig bewegt sich der zugehörige Gegenkolben in Richtung AK3, um die Abgase vollends auszustoßen. Dieser Vorgang ist in der Fig. 5e abgeschlossen.

Gemäß Fig. 5f gelangt AK3 nun in den Überlappungsbereich mit dem ersten Einlass E1 für Gemisch oder Luft und der Gegenkolben entfernt sich wieder von AK3, wodurch der Ansaugtakt eingeleitet wird. Dieser setzt sich über die Fig. 5g und 5h fort. Der Raum zwischen AK3 und dem Gegenkolben ist nun mit Gemisch oder Luft gefüllt. In der Tabelle ist das Ende der Spalte für AK3 erreicht.

Für die weitere Betrachtung ist auf die in der Tabelle für AK5 aufgeführte Spalte zurückzugreifen, mit der Maßgabe, dass nun das letzte Drittel der Taktfolge für AK1 beschrieben wird und im Folgenden AK5 lediglich aus Gründen der besseren Orientierung in Fig. 5a bis 5f verwendet wird.

Die Überlappung von AK5 mit E1 endet im nicht dargestellten Bereich zwischen Fig. 5a und 5b. Gleichzeitig bewegt sich der Gegenkolben wieder in Richtung AK5 und verdichtet die vorher angesaugte Luft bzw. das vorher angesaugte Gemisch. Fig. 5c ist zu entnehmen, dass AK5 nun in den Überlappungsbereich mit dem Steuerfenster für den Auslass AS zum Speicher gelangt ist. Dieser wird durch die weitere Bewegung des Gegenkolbens in Richtung AK5 aufgeladen. Der Ladevorgang ist in der in Fig. 5e gezeigten Stellung abgeschlossen.

AK5 gelangt nun in den Überlappungsbereich mit dem zweiten Einlass E2 für Luft oder Gemisch und der Gegenkolben entfernt sich von AK5 um einen weiteren Ansaugtakt einzuteilen. Dieser setzt sich über die Fig. 5f und 5g hinweg fort, bis der Einlass E2 in Fig. 5h wieder schließt, d.h. außerhalb des Überlappungsbereiches von AK5 mit E2 gelangt. Damit ist das Ende der Spalte für AK5 erreicht und der 360° Zyklus für AK1 beendet.

Für den weiteren Verlauf hinsichtlich AK1 ist an den Anfang der vorstehenden Beschreibung der Fig. 5a bis 5h zurückzukehren. Die sechs Takte für AK1 lassen sich damit wie folgt zusammenfassen: Aufladung der AK1 vom Speicher, Verdichtung und Zündung, Verbrennung und Expansion, Ausschieben der Abgase, Ansaugen frischer Luft bzw. frischen Gemisches, Verdichtung und Aufladen des Speichers, zweites Ansaugen frischer Luft bzw. frischen Gemisches.

Die Taktfolge für AK2 bis AK6 ist analog zu betrachten, wodurch sich eine Zündfolge AK6, AK5, AK4, AK3, AK2, AK1 ergibt.

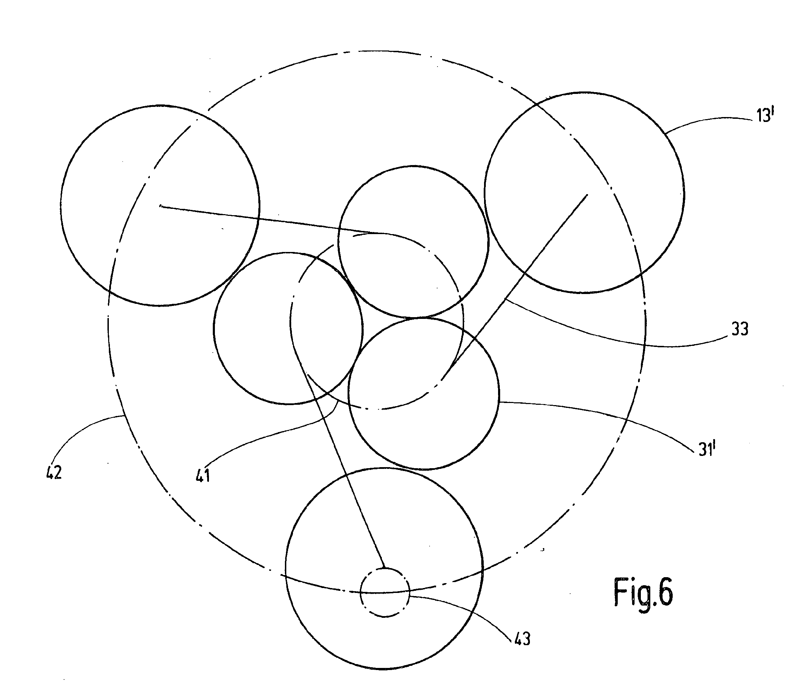

In Fig. 6 sind die Lageraugen der Pleuelstangen 33 durch die durchgezogenen Kreise 13', 31' angedeutet. Der innere strichpunktierte Kreis 41 ist der geometrische Ort der Zentren der kleinen Lageraugen bei ihrem Umlauf. Der große äußere strichpunktierte Kreis 42 ist der geometrische Ort der Zentren der die äußeren Pleuellager aufweisenden Exzenterwellen 32, während der kleine äußere strichpunktierte Kreis 43 die Exzentrizität der Exzenterwellen 32 darstellt. Fig. 6 zeigt, wie der verfügbare Bauraum durch die Dimensionierung der kleinen und großen Lageraugen der Pleuelstangen 33 genutzt wird. Ziel ist es, diese möglichst groß zu dimensionieren, um eine hinreichende Belastbarkeit bei der über die Pleuelstangen 33 erfolgende Kraftübertragung zwischen dem Innenrotor 31 und dem Außenrotor 13 zu gewährleisten, insbesondere wenn die Pleuelzapfen 38 am Innenrotor 31 einstückig mit diesem aus einer Leichtmetalllegierung bestehen, die einen geringeren Festigkeitswert als beispielsweise Stahl aufweist. Selbstverständlich muss der Freigang zwischen benachbarten Pleuelstangen 33 bzw. Lageraugen beim Umlauf der Rotoren 13, 31 noch gewährleistet sein. Es hat sich gezeigt, dass es besonders günstig ist, wenn das Verhältnis des Radius des großen äußeren strichpunktierten Kreises 42 zum Radius des inneren strichpunktierten Kreises 41 etwa 2,5:1 bis 3,5:1 und insbesondere etwa 3,0:1 beträgt.

Fig. 7 zeigt einen vereinfachten Längsschnitt analog Fig. 1, wobei hier eine der in den Kolben 13a-c angeordnete Zahnradölpumpe und die Kühlölführung im Bereich der Gegenkolben näher dargestellt ist. Die Zahnradölpumpe weist im wesentlichen zwei zylinderartige Zahnräder 70, 71 auf, die in oberen und unteren Pumpenscheiben 72, 73 gelagert sind. Das Zahnrad 70 ist mit der Exzenterwelle 32 drehstarr verbunden, beispielsweise durch einen Wellenversatz ausgleichenden Mitnehmer, und wird dadurch von dieser angetrieben. Das Zahnrad 71 wird seinerseits vom Zahnrad 70 angetrieben. Das Kühlöl wird in den Zahnzwischenräumen entlang des Außenumfangs transportiert und kühlt dabei die Kolben. Der Ölzutritt im Bereich des Einsatzes 17 ist durch den Pfeil 60 gekennzeichnet. Durch Bohrungen 61 gelangt das Öl in die Ringnut 62 (vgl. Fig. 3c), die im Bereich dreier der Bohrungen 39 vertieft ist und mit diesen kommuniziert. An die Bohrung 39 schließen vier parallel zueinander im Gegenkolben schräg verlaufende Kanäle 63 an, die zur Kühltasche 46 führen. Von der Kühltasche 46 führen vier entsprechende Kanäle 64 zurück zu den drei anderen Bohrungen 39 im Innenrotor 31, die mit der Ringnut 65 kommunizieren. Von dort gelangt das Kühlöl dann über den Einsatz 17 in den weiteren Ölkreislauf.

Zusammenfassend ist folgendes festzuhalten: Die Erfindung betrifft eine mittelachsige Umlaufkolben-Brennkraftmaschine, mit einem durch einen abtriebsseitigen und einen abtriebsgegenseitigen Gehäusedeckel 3, 2 verschlossenen kreiszylindrischen Rotorgehäuse 1, einem im Rotorgehäuse 1 um dessen Mittelachse mit gleichförmiger Geschwindigkeit umlaufenden, einen abtriebsseitigen und einen abtriebsgegenseitigen Rotordeckel 12, 15 tragenden Außenrotor 13 und einem im Inneren des Außenrotors 13 um die Mittelachse mit ungleichförmiger Geschwindigkeit umlaufenden Innenrotor 31, wobei der Außenrotor 13 mehrere radial nach innen weisende, starr miteinander verbundene Kolben und der Innenrotor 31 eine entsprechende Anzahl radial nach außen weisende, zwischen je zwei Kolben des Außenrotors 13 unter Begrenzung je zweier Arbeitskammern AK eingreifende, starr miteinander verbundene Gegenkolben aufweist und wobei jeder Arbeitskammer AK ein Brennraum zugeordnet ist und jeder Brennraum über ein Steuerfenster mit stationären Ein- und Auslassöffnungen kommuniziert. Um den Wirkungsgrad der Brennkraftmaschine zu verbessern, wird gemäß der Erfindung vorgeschlagen, dass der Außenrotor 13 drei in gleichen Winkelabständen zueinander angeordnete Kolben 13a-c aufweist.

## Patentansprüche

1. Mittelachsige Umlaufkolben-Brennkraftmaschine, mit einem durch einen abtriebsseitigen und einen abtriebsgegenseitigen Gehäusedeckel (3, 2) verschlossenen kreiszylindrischen Rotorgehäuse (1), einem im Rotorgehäuse (1) um dessen Mittelachse mit gleichförmiger Geschwindigkeit umlaufenden, einen abtriebsseitigen und eine abtriebsgegenseitigen Rotordeckel (12, 15) tragenden Außenrotor (13) und einem im Inneren des Außenrotors (13) um die Mittelachse mit ungleichförmiger Geschwindigkeit umlaufenden Innenrotor (31), wobei der Außenrotor (13) mehrere radial nach innen weisende, starr miteinander verbundene Kolben (13a - c) und der Innenrotor (31) eine entsprechende Anzahl radial nach außen weisende, zwischen je zwei Kolben des Außenrotors unter Begrenzung je zweier Arbeitskammern (AK) eingreifende, starr miteinander verbundene Gegenkolben (31 a-c) aufweist und wobei jeder Arbeitskammer ein Brennraum zugeordnet ist und jeder Brennraum über ein Steuerfenster mit stationären Ein- und Auslassöffnungen kommuniziert, **dadurch gekennzeichnet, dass** der Außenrotor (13) drei in gleichen Winkelabständen zueinander angeordnete Kolben (13a - c) aufweist und dass in dem Rotorgehäuse (1) und/oder mindestens einem der Gehäusedeckel (2, 3) in Umlaufrichtung der Kolben (13a - c) in Folge eine erste Einlassöffnung (E1) für Luft oder Brennstoffgemisch, eine Auslassöffnung (AS) zu einem Gasspeicher, eine zweite Einlassöffnung (E2) für Luft oder Brennstoffgemisch, eine Einlassöffnung (ES) vom Gasspeicher und mindestens eine Auslassöffnung (A1, A2) vorgesehen sind.

2. Brennkraftmaschine nach Anspruch 1, **dadurch gekennzeichnet, dass** an dem Innenrotor (31) drei in gleichen Winkelabständen angeordnete Pleuelzapfen (38) vorgesehen sind, an denen drei mit ihren anderen Enden über Exzenterwellen mit dem Außenrotor (13) verbundene Pleuelstangen (33) gelagert sind.

3. Brennkraftmaschine nach Anspruch 1 oder 2, **dadurch gekennzeichnet, dass** die Zentren der Pleuelzapfen im Abstand von der Mittelebene der Gegenkolbens (31 a-c) angeordnet sind.

4. Brennkraftmaschine nach einem der Ansprüche 1 bis 3, **dadurch gekennzeichnet, dass** die Pleuelzapfen (38) einstückig mit dem Innenrotor (31) ausgebildet sind.

5. Brennkraftmaschine nach einem der Ansprüche 1 bis 4, **dadurch gekennzeichnet, dass** der Innenrotor (31) aus Leichtmetall, insbesondere aus einer Aluminiumlegierung besteht.

6. Brennkraftmaschine nach einem der Ansprüche 1 bis 5, **dadurch gekennzeichnet, dass** die Pleuelstangen (33) ungeteilte große Pleuelaugen aufweisen.

7. Brennkraftmaschine nach einem der Ansprüche 1 bis 6, **dadurch gekennzeichnet, dass** an dem Gehäuse (1) ein Hohlrad (4) angeordnet ist, mit dem auf den Exzenterwellen (32) angeordnete Planetenräder (37) in kämmenden Eingriff stehen.

8. Brennkraftmaschine nach Anspruch 7, **dadurch gekennzeichnet, dass** die Planetenräder (37) einstückig mit den Exzenterwellen ausgebildet sind.

9. Brennkraftmaschine nach Anspruch 7 oder 8, **dadurch gekennzeichnet, dass** die Mittelachse der Planetenräder (37) zur Mittelachse einer Pleuellagerpartie der Exzenterwellen (32) parallel versetzt ist.

10. Brennkraftmaschine nach einem der Ansprüche 1 bis 9, **dadurch gekennzeichnet, dass** in jedem Brennraum eine Zündkerze (40) angeordnet ist.

11. Brennkraftmaschine nach Anspruch 10, **dadurch gekennzeichnet, dass** jede der Kerzen (40) zentral in ihrem Brennraum angeordnet ist.

12. Brennkraftmaschine nach Anspruch 10 oder 11, **dadurch gekennzeichnet, dass** die Zündkerzen (40) mittels einer vom Rotorgehäuse zum Außenrotor (13) führenden Funkenstrecke mit elektrischer Energie versorgt werden.

13. Brennkraftmaschine nach einem der Ansprüche 10 bis 12, **dadurch gekennzeichnet, dass** der Außenrotor (13) am Umfang elektrisch isoliert ist.

14. Brennkraftmaschine nach einem der Ansprüche 1 bis 9, **dadurch gekennzeichnet, dass** eine Zündkerze im oberen Gehäusedeckel (2) angeordnet ist, die für die Zündung des Gemisches in sämtlichen Brennräumen zuständig ist.

15. Brennkraftmaschine nach einem der Ansprüche 1 bis 14, **dadurch gekennzeichnet, dass** das Verhältnis der Radien der geometrischen Orte der Zentren der Planetenräder (37) und der kleinen Pleuelaugen der Pleuelstangen (33) beim Umlauf der Rotoren im Bereich von 2,5:1 bis 3,5:1 liegt und vorzugsweise etwa 3,0:1 beträgt.

16. Brennkraftmaschine nach einem der Ansprüche 1 bis 15, **dadurch gekennzeichnet, dass** in dem Außenrotor (13) mindestens eine als Zahnradpumpe ausgebildete Ölpumpe vorgesehen ist, deren Antriebszahnrad mit der Exzenterwelle (32) verbunden ist.

17. Brennkraftmaschine nach einem der Ansprüche 1 bis 16, **dadurch gekennzeichnet, dass** in jedem von drei Kolben (13a - c) des Außenrotors (13) eine als Zahnradpumpe ausgebildete Ölpumpe vorgesehen ist.

18. Brennkraftmaschine nach einem der Ansprüche 1 bis 17, **dadurch gekennzeichnet, dass** eine im Wesentlichen ringförmig ausgebildete Ölsammelwanne (5) für Schmier- und/oder Kühlöl koaxial zur Mittelachse der Rotoren (13, 31) angeordnet ist.

19. Verfahren zum Betrieb einer Brennkraftmaschine nach einem der Ansprüche 1 bis 18, umfassend die folgenden Schritte:
a) Ansaugen einer Ladung;
b) Vorverdichtung der Ladung in einer Arbeitskammer und Drücken der Ladung in einen Ladungsspeicher;
c) erneutes Ansaugen von Ladung in die Arbeitskammer und Zugabe von Ladung aus dem Speicher;
d) Verdichtung beider Ladungsanteile; Zündung und Verbrennung der verdichteten Ladung;
e) Expandieren; und
f) Ausstoßen der Verbrennungsgase.

20. Verfahren nach Anspruch 19, **dadurch gekennzeichnet, dass** der Ladungswechsel über vorzugsweise axial angeordnete Steueröffnungen erfolgt.

21. Verfahren nach Anspruch 19 oder 20, **gekennzeichnet durch** eine Aufladung **durch** einen externen Kompressor oder Turbolader.

22. Verwendung einer Brennkraftmaschine nach einem der Ansprüche 1 bis 18 als Lademotor für Akkumulatoren in einem Hybrid-Kraftfahrzeug, bei dem der Antrieb ausschließlich über einen oder mehrere von diesen gespeiste Elektromotoren erfolgt.

23. Verwendung einer Brennkraftmaschine nach einem der Ansprüche 1 bis 18 als Antrieb für eine mobile oder stationäre Kleinanlage zur Erzeugung von Strom, Wärme/Kälte, und/oder mechanischer oder hydraulischer Energie.

## Claims

1. A central-axis rotary piston internal combustion engine having a round cylindrical rotor housing (1) which is closed off by a housing cover (3) on the output side and a housing cover (2) on the side opposite the output side, an external rotor (13) which rotates at uniform speed in the rotor housing (1) about its central axis and which supports a rotor cover (12) on the output side and a rotor cover (15) on the side opposite the output side, and an internal rotor (31) which rotates at non-uniform speed in the interior of the external rotor (13) about its central axis, wherein the external rotor (13) has a plurality of radially inwardly pointing pistons (13a-c) which are rigidly connected to one another, and the internal rotor (31) has a corresponding number of radially outwardly pointing opposing pistons (31a-c) which are rigidly connected to one another and engage between, in each case, two pistons of the external rotor so as to delimit two working chambers (AK) in each case, and wherein each working chamber is assigned a combustion chamber, and each combustion chamber communicates via a control window with fixed inlet openings and outlet openings, **characterized in that** the external rotor (13) has three pistons (13a-c) which are arranged at equal angular intervals from one another, and **in that**, in the rotor housing (1) and/or at least one of the housing covers (2, 3), a first inlet opening (E1) for air or fuel mixture, outlet opening (AS) to a gas accumulator, a second inlet opening (E2) for air or fuel mixture, an inlet opening (ES) of the gas accumulator and at least one outlet opening (A1, A2) are provided in series in the circumferential direction of the pistons (13a-c).

2. The internal combustion engine as claimed in claim 1, **characterized in that** three connecting rod journals (38) which are arranged at equal angular intervals are provided on the internal rotor (31), on which connecting rod journals (38) three connecting rods (33) which are connected by their other ends to the external rotor (13) via eccentric shafts are mounted.

3. The internal combustion engine as claimed in claim 1 or 2, **characterized in that** the centers of the connecting rod journals are arranged at a distance from the central plane of the opposing piston (31 a-c).

4. The internal combustion engine as claimed in one of claims 1 to 3, **characterized in that** the connecting rod journals (38) are embodied in one piece with the internal rotor (31).

5. The internal combustion engine as claimed in one of claims 1 to 4, **characterized in that** the internal rotor (31) is composed of lightweight metal, in particular of an aluminum alloy.

6. The internal combustion engine as claimed in one of claims 1 to 5, **characterized in that** the connecting rods (32) have large undivided connecting rod eyes.

7. The internal combustion engine as claimed in one of claims 1 to 6, **characterized in that** an internal geared wheel (4), with which planet gears (37) arranged on the eccentric shafts (32) are in intermeshing engagement, is arranged on the housing (1).

8. The internal combustion engine as claimed in claim 7, **characterized in that** the planet gears (37) are embodied in one piece with the eccentric shafts.

9. The internal combustion engine as claimed in claim 7 or 8, **characterized in that** the central axis of the planet gears (37) are offset parallel to the central axis of a connecting rod bearing part of the eccentric shafts (32).

10. The internal combustion engine as claimed in one of claims 1 to 9, **characterized in that** a sparkplug (40) is arranged in each combustion chamber.

11. The internal combustion engine as claimed in claim 10, **characterized in that** each of the sparkplugs (40) is arranged centrally in its combustion chamber.

12. The internal combustion engine as claimed in claim 10 or 11, **characterized in that** the sparkplugs (40) are supplied with electrical energy by means of a spark gap which extends from the rotor housing to the external rotor (13).

13. The internal combustion engine as claimed in one of claims 10 to 12, **characterized in that** the external rotor (13) is electrically insulated at the circumference.

14. The internal combustion engine as claimed in one of claims 1-9, **characterized in that** a sparkplug, which is responsible for igniting the mixture in all the combustion chambers, is arranged in the upper housing cover (2).

15. The internal combustion engine as claimed in one of claims 1-14, **characterized in that** the ratio of the radii of the geometric locations of the centers of the planet gears (37) and of the small connecting rod bearings of the connecting rods (33) is in the range from 2.5:1 to 3.5:1 as the rotors rotate, and is preferably approximately 3.0:1.

16. The internal combustion engine as claimed in one of claims 1 to 15, **characterized in that** at least one oil pump, which is embodied as a gearwheel pump and whose drive gearwheel is connected to the eccentric shaft (32), is provided in the external rotor (13).

17. The internal combustion engine as claimed in one of claims 1 to 16, **characterized in that** an oil pump which is embodied as a gearwheel pump is provided in each of three pistons (13a-c) of the external rotor (13).

18. The internal combustion engine as claimed in one of claims 1 to 17, **characterized in that** an essentially annular oil collecting trough (5) for lubricating and/or cooling oil is arranged coaxially with respect to the central axis of the rotors (13, 31).

19. A method for operating an internal combustion engine as claimed in one of claims 1 to 18, comprising the following steps:
a) intake of a charge;
b) precompression of the charge in a working chamber and compression of the charge into a charge accumulator;
c) renewed intake of charge into the working chamber and addition of charge from the accumulator;
d) compression of the two components of the charge; ignition and combustion of the compressed charge;
e) expansion; and
f) expulsion of the combustion gases.

20. The method as claimed in claim 19, **characterized in that** the charge cycle takes place via preferably axially arranged control openings.

21. The method as claimed in claim 19 or 20, **defined by** supercharging by means of an external compressor or turbocharger.

22. Use of an internal combustion engine as claimed in one of claims 1 to 18 as a charge motor for accumulators in a hybrid motor vehicle, in which the drive is provided exclusively via one or more electromotors which are fed by the latter.

23. The use of an internal combustion engine as claimed in one of claims 1 to 18 as a drive for a mobile or fixed small installation for generating current, heat/cold and/or mechanical or hydraulic energy.

## Revendications

1. Moteur à combustion interne dont le piston tourne autour d'un axe central, doté
d'un carter cylindrique circulaire (1) de rotor fermé par des couvercles de carter (3, 2), l'un situé du côté entraîné et l'autre du côté opposé au côté entraîné,
d'un rotor extérieur (13) qui tourne à vitesse constante dans le carter de rotor (1) autour de son axe central et qui porte des couvercles de rotor (12, 15), l'un situé du côté entraîné et l'autre du côté opposé au côté entraîné, et
d'un rotor intérieur (31) qui tourne à vitesse non uniforme autour de l'axe central à l'intérieur du rotor extérieur (13),
le rotor extérieur (13) présentant plusieurs pistons (13a-c) reliés rigidement les uns aux autres et orientés radialement vers l'intérieur et le rotor intérieur (31) présentant un nombre correspondant de contre-pistons (31a-c) reliés rigidement les uns aux autres, orientés radialement vers l'extérieur et engagés chacun entre deux pistons du rotor extérieur en délimitant chacun deux chambres de travail (AK),
une chambre de combustion étant associée à chaque chambre de travail et chaque chambre de travail communiquant par une fenêtre pilote à des ouvertures stationnaires d'admission et d'échappement,
**caractérisé en ce que**
le rotor extérieur (13) présente trois pistons (13a-c) associés les uns aux autres à des écarts angulaires identiques et
**en ce que** dans le carter de rotor (1) et/ou dans l'un des couvercles de carter (2, 3), une première ouverture (E1) d'admission d'air ou d'un mélange de carburant, une sortie d'échappement (AS) qui conduit à un réservoir à gaz, une deuxième ouverture (E2) d'admission d'air ou d'un mélange de carburant, une ouverture d'admission (ES) reliée à la réserve de gaz et au moins une ouverture d'échappement (A1, A2) sont prévues à la suite l'une de l'autre dans le sens de rotation des pistons (13a-c).

2. Moteur à combustion interne selon la revendication 1, **caractérisé en ce que** trois tourillons de bielle (38) disposés à même écart angulaire, et sur lesquels trois tiges de bielle (33) reliées par des arbres excentriques au rotor extérieur (13) par leur autre extrémité sont montées, sont prévus sur le rotor intérieur (31).

3. Moteur à combustion interne selon la revendication 1 ou 2, **caractérisé en ce que** les centres des tourillons de bielle sont disposés à distance du plan central des contre-pistons (31a-c).

4. Moteur à combustion interne selon l'une des revendications 1 à 3, **caractérisé en ce que** les tourillons de bielle (38) sont formés d'un seul tenant avec le rotor intérieur (31).

5. Moteur à combustion interne selon l'une des revendications 1 à 4, **caractérisé en ce que** le rotor intérieur (31) est réalisé en métal léger et en particulier en alliage d'aluminium.

6. Moteur à combustion interne selon l'une des revendications 1 à 5, **caractérisé en ce que** les tiges de bielle (33) présentent de grands oeillets non divisés de bielle.

7. Moteur à combustion interne selon l'une des revendications 1 à 6, **caractérisé en ce qu'**une roue creuse (4) sur laquelle des roues planétaires (37) disposées sur les arbres excentriques (32) s'engagent est disposée sur le carter (1).

8. Moteur à combustion interne selon la revendication 7, **caractérisé en ce que** les roues planétaires (37) sont configurées d'un seul tenant avec les arbres excentriques.

9. Moteur à combustion interne selon la revendication 7 ou 8, **caractérisé en ce que** l'axe central des roues planétaires (37) est décalé et parallèle par rapport à l'axe central d'une partie de palier de bielle des arbres excentriques (32).

10. Moteur à combustion interne selon l'une des revendications 1 à 9, **caractérisé en ce qu'**une bougie d'allumage (40) est disposée dans chaque chambre de combustion.

11. Moteur à combustion interne selon la revendication 10, **caractérisé en ce que** chacune des bougies (40) est disposée au centre de chaque chambre de combustion.

12. Moteur à combustion interne selon les revendications 10 ou 11, **caractérisé en ce que** les bougies d'allumage (40) sont alimentées en énergie électrique au moyen d'un parcours radio qui relie le carter de rotor au rotor extérieur (13).

13. Moteur à combustion interne selon l'une des revendications 10 à 12, **caractérisé en ce que** la
périphérie du rotor extérieur (13) est isolée électriquement.

14. Moteur à combustion interne selon l'une des revendications 1 à 9, **caractérisé en ce qu'**une bougie d'allumage qui sert à allumer le mélange dans toutes les chambres de combustion est disposée dans le couvercle supérieur (2) du carter.

15. Moteur à combustion interne selon l'une des revendications 1 à 14, **caractérisé en ce que** lors de la rotation des rotors, le rapport entre le rayon des emplacements géométriques des centres des roues planétaires (37) et les petits oeillets des tiges de bielle (33) est compris dans la plage de 2,5:1 à 3,5:1 et vaut de préférence environ 3,0:1.

16. Moteur à combustion interne selon l'une des revendications 1 à 15, **caractérisé en ce qu'**au moins une pompe à huile configurée comme pompe à engrenages et dont la roue dentée d'entraînement est reliée à l'arbre excentrique (32) est prévue dans le rotor extérieur (13).

17. Moteur à combustion interne selon l'une des revendications 1 à 16, **caractérisé en ce qu'**une pompe à huile configurée comme pompe à engrenages est prévue dans chacun des trois pistons (13a-c) du rotor extérieur (13).

18. Moteur à combustion interne selon l'une des revendications 1 à 17, **caractérisé en ce qu'**une cuve (5) de collecte d'huile de lubrification et/ou de refroidissement, de configuration essentiellement annulaire, est disposée coaxialement par rapport à l'axe central des rotors (13, 31).

19. Procédé de conduite d'un moteur à combustion interne selon l'une des revendications 1 à 18, comprenant les étapes suivantes :
a) aspiration d'une charge,
b) pré-compression de la charge dans une chambre de travail et compression de la charge dans un réservoir de charge,
c) nouvelle aspiration d'une charge dans la chambre de travail et addition de la charge de la réserve,
d) compression des deux parties de la charge, allumage et combustion de la charge comprimée,
e) détente et
f) expulsion des gaz de combustion.

20. Procédé selon la revendication 19, **caractérisé en ce que** le renouvellement de charge a lieu par des ouvertures pilotes disposées de préférence axialement.

21. Procédé selon la revendication 19 ou 20, **caractérisé par** une charge délivrée par un compresseur externe ou un turbocompresseur.

22. Utilisation d'un moteur à combustion interne selon l'une des revendications 1 à 18 comme moteur de charge d'accumulateurs d'un véhicule hybride dont l'entraînement s'effectue exclusivement par un ou plusieurs moteurs électriques alimentés par ces derniers.

23. Utilisation d'un moteur à combustion interne selon l'une des revendications 1 à 18 comme entraînement d'une petite installation mobile ou stationnaire de production de courant, de chaleur ou de froid et/ou d'énergie mécanique ou hydraulique.
